# EUROPEAN PATENT APPLICATION

(11) **EP 4 711 924 A1**
(43) Date of publication of application: **18.03.2026**
(21) Application number: 24881323.0
(22) Date of filing: 20.09.2024
(51) Int. Cl.: G06F 9/50, G06F 3/0481

(54) **SOME/IP SERVICE TESTING SYSTEM AND METHOD**

(30) Priority: 23.10.2023 CN 202311382448
(71) Applicant: Guangzhou Xiaopeng Motors Technology Co., Ltd., Guangzhou, Guangdong 510000 (CN)
(72) Inventor: DING, Zeyu, Guangzhou, Guangdong 510000 (CN)
(74) Representative: Ran, Handong
(86) International application number: PCT/CN2024/120162
(87) International publication number: WO 2025/086957

(57) **Abstract**

A SOME/IP service testing system. The SOME/IP service testing system comprises a host computer (10), an Ethernet converter (20), and at least one electronic control unit (30). The host computer (10) is connected to the Ethernet converter (20) by means of an Ethernet wire harness, and the Ethernet converter (20) is connected to the electronic control unit (30) by means of an automotive Ethernet wire harness. The host computer (10) is used for starting a testing interface thread, displaying a testing interface to a user, and acquiring operation information of the user in the testing interface. The host computer (10) is further used for starting preset sub-threads on the basis of the operation information and testing a SOME/IP service in the electronic control unit (30), wherein the preset sub-threads at least include a service import thread, a connection subscription thread, a service request thread, a receiving thread, and a display thread. The host computer (10) is further used for generating a testing result when the testing is completed, and on the basis of the testing result, determining whether the SOME/IP service in the electronic control unit (30) is abnormal.

## Description

### Cross Reference to Related Application

The present application claims priority to Chinese patent application No. 202311382448X filed to the China National Intellectual Property Administration on October 23, 2023, which in its entirety is incorporated herein by reference.

### Technical Field

The present application relates to the field of testing in-vehicle electronic control units, and in particular to a SOME/IP service testing system and method.

### Background

In a vehicle SOA (Service-Oriented Architecture), testing SOME/IP (Scalable Service-Oriented Middleware over IP) services in Electronic Control Units (ECUs) is typically performed using a host computer UI, in combination with data transmission and processing to simulate a SOME/IP client and implement basic functions. However, irregular timing of Ethernet data reception and SOME/IP message transmission, the testing system's high requirements for real-time data display, and time-consuming resource usage by serialization and deserialization may all lead to frequent lagging or even crashes of the host computer.

The above description is provided merely to facilitate understanding the technical solutions of the present application and should not be construed as an acknowledgment that such content constitutes prior art.

### Summary of Invention

The objective of the present application is to provide a SOME/IP service testing system and method that address the technical problem of the host computer UI blockage during SOME/IP service testing in prior art.

To achieve the above objective, the present application provides a SOME/IP service testing system. The SOME/IP service testing system comprises a host computer, an Ethernet converter, and at least one in-vehicle electronic control unit. The host computer is connected to the Ethernet converter via an Ethernet harness, and the Ethernet converter is connected to the electronic control unit via an in-vehicle Ethernet harness.

The host computer is configured to start a testing interface thread, display a testing interface to a user, and acquire operation information of the user in the testing interface.

The host computer is further configured to start a preset sub-thread based on the operation information to test a SOME/IP service in the electronic control unit, wherein the preset sub-thread at least includes a service import thread, a connection and subscription thread, a service request thread, a receiving thread, and a display thread.

The host computer is further configured to generate a test result when the testing is completed, and determine, based on the test result, whether the SOME/IP service in the electronic control unit is abnormal.

Optionally, the host computer is provided with an SOA client module and the electronic control unit is provided with an SOA server module, wherein the SOA client module and the SOA server module establish communication connection through a SOME/IP protocol.

To realize the above objective, the present application further provides a SOME/IP service testing method, comprising:
starting a testing interface thread, displaying a testing interface to a user, and acquiring operation information of the user in the testing interface;
starting a preset sub-thread based on the operation information to test the SOME/IP service in the electronic control unit, wherein the preset sub-thread at least includes a service import thread, a connection and subscription thread, a service request thread, a receiving thread, and a display thread; and
generating a test result when the testing is completed, and determining, based on the test result, whether the SOME/IP service in the electronic control unit is abnormal.

Optionally, starting a preset sub-thread based on the operation information to test the SOME/IP service in multiple electronic control units comprises:
starting a service import thread when the operation information is service import operation information;
reading a service matrix according to a path of the service matrix;
determining network node information, service deployment information, and service interface information based on the service matrix; and
displaying a list of electronic control units based on the network node information, service deployment information, and service interface information, and acquiring a target electronic control unit selected by the user from the list of the electronic control units.

Optionally, starting a preset sub-thread based on the operation information to test the SOME/IP service in multiple electronic control units comprises:
starting a service request thread when the operation information is service request operation information;
determining a request parameter based on the service request operation information;
generating a service request message based on a target service and the request parameter;
sending the service request message to the target electronic control unit; and
determining that invocation of the target service is completed when a request response is received from the target electronic control unit within a preset time.

Optionally, the SOME/IP service testing method further comprises:
displaying a service list corresponding to the target electronic control unit based on the network node information, service deployment information, and service interface information, and acquiring a target service selected by the user from the service list.

Optionally, starting a preset sub-thread based on the operation information to test the SOME/IP service in multiple electronic control units comprises:
starting a connection and subscription thread when the operation information is subscription operation information;
generating a service discovery message based on the service deployment information;
sending the service discovery message to the target electronic control unit; and
determining that a SOME/IP connection is established when a connection response is received from the target electronic control unit.

Optionally, after starting the connection and subscription thread when the operation information is subscription operation information, the method further comprises:
generating a subscription message based on the service interface information;
sending the subscription message to the target electronic control unit; and
determining that subscription is successful when a subscription response is received from the target electronic control unit.

Optionally, starting a preset sub-thread based on the operation information to test the SOME/IP service in multiple electronic control units comprises:
starting a receiving thread when the service request thread or the connection and subscription thread is started;
deserializing Ethernet data when the Ethernet data is received from the target electronic control unit to obtain deserialized data;
analyzing the deserialized data to determine whether the deserialized data is valid; and
updating cached service data based on the deserialized data when the deserialized data is valid.

Optionally, starting a preset sub-thread based on the operation information to test the SOME/IP service in multiple electronic control units comprises:
starting a display thread at preset intervals; and
reading the cached service data of the target electronic control unit and displaying the cached service data in the testing interface.

According to the present application, the SOME/IP service testing system comprises a host computer, an Ethernet converter, and at least one in-vehicle electronic control unit. The host computer is connected to the Ethernet converter via an Ethernet harness, and the Ethernet converter is connected to the electronic control unit via an in-vehicle Ethernet harness. The host computer is configured to start a testing interface thread, display a testing interface to a user, and acquire operation information from the user via the testing interface. Based on the operation information, the host computer starts a preset sub-thread based on the operation information to test the SOME/IP service in the electronic control unit. The preset sub-thread at least includes a service import thread, a connection and subscription thread, a service request thread, a receiving thread, and a display thread. The host computer generates a test result when the testing is completed, and determines, based on the test result, whether a SOME/IP service in the electronic control unit is abnormal. The present application provides a complete, simplified, and convenient testing system capable of testing SOME/IP services in electronic control units and identifying potential problems during single-unit testing , without waiting until vehicle-level testing phase. In addition, the system features low testing cost and easy environment setup. Compared with traditional SOME/IP service testing methods, which may cause blockage in the host computer UI, the present application separates modules that require long processing/waiting time and occupy significant amount of resources by means of multi-threading, thereby solving the problem of blocking and crashes of the host computer UI, enhancing the fluency of SOME/IP testing, and improving user-friendliness of the testing system.

### Brief Description of Drawings

The above and/or additional aspects and advantages of the present application will become apparent and readily understood from the following description of the embodiments in conjunction with the accompanying drawings:
Fig. 1 is a structural schematic diagram of a SOME/IP service testing system according to a first example of the present application;
Fig. 2 is a structural schematic diagram of at least one electronic control unit according to an example of the SOME/IP service testing system of the present application;
Fig. 3 is a refined structural schematic diagram of the SOME/IP service testing system according to an example of the present application;
Fig. 4 is a schematic diagram of a thread according to an example of the SOME/IP service testing system of the present application;
Fig. 5 is a schematic flowchart of a SOME/IP service testing method according to a first example of the present application;
Fig. 6 is a schematic flowchart of a testing interface thread according to an example of the SOME/IP service testing method of the present application;
Fig. 7 is a schematic flowchart of a SOME/IP service testing method according to a second example of the present application;
Fig, 8 is a schematic flowchart of a service import thread according to an example of the SOME/IP service testing method of the present application;
Fig. 9 is a schematic flowchart of a connection and subscription thread according to an example of the SOME/IP service testing method of the present application;
Fig. 10 is a schematic flowchart of a receiving thread according to an example of the SOME/IP service testing method of the present application;
Fig. 11 is a schematic flowchart of a SOME/IP service testing method according to a third example of the present application;
Fig. 12 is a schematic flowchart of a service request thread according to an example of the SOME/IP service testing method of the present application;
Fig. 13 is a schematic flowchart of a SOME/IP service testing method according to a fourth example of the present application;
Fig. 14 is a schematic flowchart of a display thread according to an example of the SOME/IP service testing method of the present application;
Fig. 15 is an overall schematic flowchart of a SOME/IP service testing method according to an example of the present application.

Description of main elements:

| Number | Name | Number | Name |
|---|---|---|---|
| 10 | Host computer | 101 | SOA client module |
| 20 | Ethernet converter | 301 | SOA server module |
| 30 | Electronic control unit | | |

### Detailed Description

It should be appreciated that the embodiments described herein are provided solely to illustrate the present application, and are not intended to limit the present application.

The technical solutions of the embodiments of the present application will be described clearly and completely with reference to the accompanying drawings. The embodiments described below are only a part of the embodiments of the present application rather than all embodiments. All other embodiments obtained by a persons skilled in the art based on the embodiments in the present application without inventive effort are all within the scope of the present application.

It should be noted that all directional indications (e.g., up, down, left, right, front, back) used herein are provided solely to describe the relative positions or movements of components in a specific posture (e.g., as shown in the drawings). If the posture changes, the directional indications change accordingly.

Furthermore, the terms "first," "second," and similar terms are used only for descriptive purposes and are not intended to indicate or imply relative importance or imply the number of the technical features. Thus, features described as "first" or "second" may explicitly or implicitly include at least one such feature. Technical solutions of different embodiments may be combined, provided that such combination is feasible for a person skilled in the art. Combination of technical solutions that are contradictory or infeasible are considered non-existent and is not within the scope of the present application.

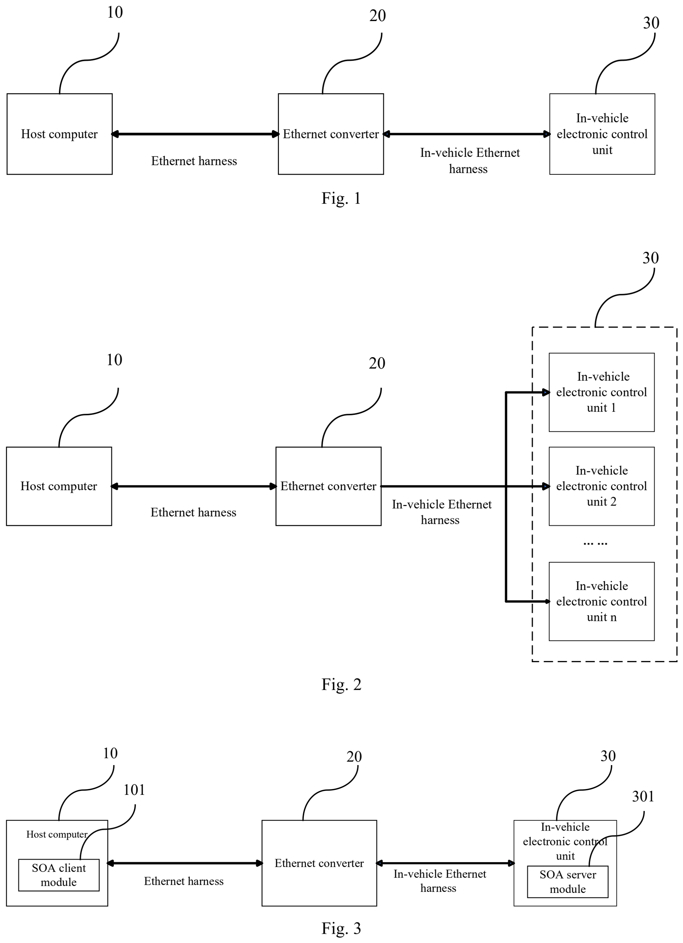

Referring to Fig. 1, which shows a structural schematic diagram of a SOME/IP service testing system according to a first embodiment of the present application. The present application provides the first embodiment of the SOME/IP service testing system.

As shown in Fig. 1, in this embodiment, the SOME/IP service testing system includes a host computer 10, an Ethernet converter 20, and at least one in-vehicle electronic control unit 30. The host computer 10 is connected to the Ethernet converter 20 via an Ethernet harness, and the Ethernet converter 20 is connected to the in-vehicle electronic control unit 30 via an in-vehicle Ethernet harness.

It should be noted that the host computer 10, serving as a SOME/IP Client, can run a SOME/IP service testing program to implement multi-threaded SOME/IP testing, including testing of SD (service discovery), Method invocation, Event subscription, and status display functions.

It should be understood that the Ethernet harness in the embodiment refers to a conventional Ethernet harness, which is based on IEEE 802.3u/802.3ab, enabling 100 Mbps or Gigabit Ethernet communication over 2-4 pairs of Unshielded Twisted Pairs (UTP). The in-vehicle Ethernet harness according to the embodiment is based on IEEE 802.3bw/802.3bp standards and realizes 100 Mbps or Gigabit Ethernet communication over a single pair of UTP. The Ethernet converter 20 may be an in-vehicle Ethernet converter which can convert between in-vehicle Ethernet (1 pair UTP) and the conventional Ethernet (2-4 pairs UTP), to enable Ethernet communication between the electronic control unit 30 and the host computer 10.

It should be understood that serving as a SOME/IP Server, the electronic control unit 30 is used to deploy in-vehicle SOME/IP services in an SOA architecture, providing in-vehicle SOA services to a vehicle body systems, chassis systems, and three-electric systems. The electronic control unit 30 according to the embodiment may be an in-vehicle ECU for any one of the SOME/IP services to be tested. The SOME/IP service testing system includes at least one electronic control unit 30. If the SOME/IP service testing system includes two or more electronic control units 30, the Ethernet converter 20 is connected to them respectively by means of the in-vehicle Ethernet harness, as shown in Fig. 2.

Further, as shown in Fig. 3, the host computer comprises an SOA client module 101 and the electronic control unit comprises an SOA server module 301. The SOA client module 101 and the SOA server module 301 establish communication connection through a SOME/IP protocol.

It should be noted that the host computer 10 can establish a SOME/IP connection with the electronic control unit 30 by means of the SOA client module 101 and the SOA server module 301.

In other embodiments, the electronic control unit 30 may be replaced with an HIL test bench, which can simulate a more realistic vehicle environment. However, compared with testing using the electronic control unit 30, the HIL test bench has higher testing cost and more difficult environment setup.

It should be appreciated that the host computer 10 is configured to start a testing interface thread, display a testing interface to a user, and acquire operation information of the user in the testing interface. The host computer 10 is further configured to start a preset sub-thread based on the operation information to test a SOME/IP service or services in the electronic control unit 30. The preset sub-thread at least includes a service import thread, a connection and subscription thread, a service request thread, a receiving thread, and a display thread. The host computer 10 is further configured to generate a test result when the testing is completed, and determine, based on the test result, whether the SOME/IP service(s) in the electronic control unit 30 is/are abnormal.

It should be appreciated that the testing interface thread is a main UI thread of the present embodiment, which can display the testing interface of the host computer 10 and provide operation entries to the user. The operation entries, which may be in the form of input boxes, selection boxes, buttons, or links, are related to functions including SD, Method invocation, Event subscription, and status display. For example, the operation entries may include a service matrix import selection box, an SD starting button, a Method request parameter input box, and a Method request sending button. The testing interface may also include information display windows such as a Method response message display window, an Event information real-time display window, and an information prompt window. These can be adjusted according to actual needs and are not limited in the present embodiment. The service matrix import selection box allows selection of the path of a service matrix. The SD starting button can be used to start the SD function. The Method request parameter input box allows input of Method request parameters. The Method request sending button can be used to send a Method request. The Method response message display window can be used to display response messages to the Method request. The Event information real-time display window can be used to show Event-related information. The information prompt window can be used to display prompts.

It should be noted that the user can operate on the testing interface and operations performed by the user for the testing are referred to as operation information, which includes an operation object and operation data. The operation object is an object on which the user operates on the testing interface. For example, when the user inputs a parameter in the Method request parameter input box, the operation object is the Method request parameter input box. When the user clicks on an SD starting button, the operation object is the SD starting button. The operation data can be selected data or input data. The selected data is content that the user selects from the operation object, such as, a path that the user selects from the service matrix import selection box. The input data is data that the user inputs in the operation object, such as a parameter that the user inputs in the Method request parameter input box.

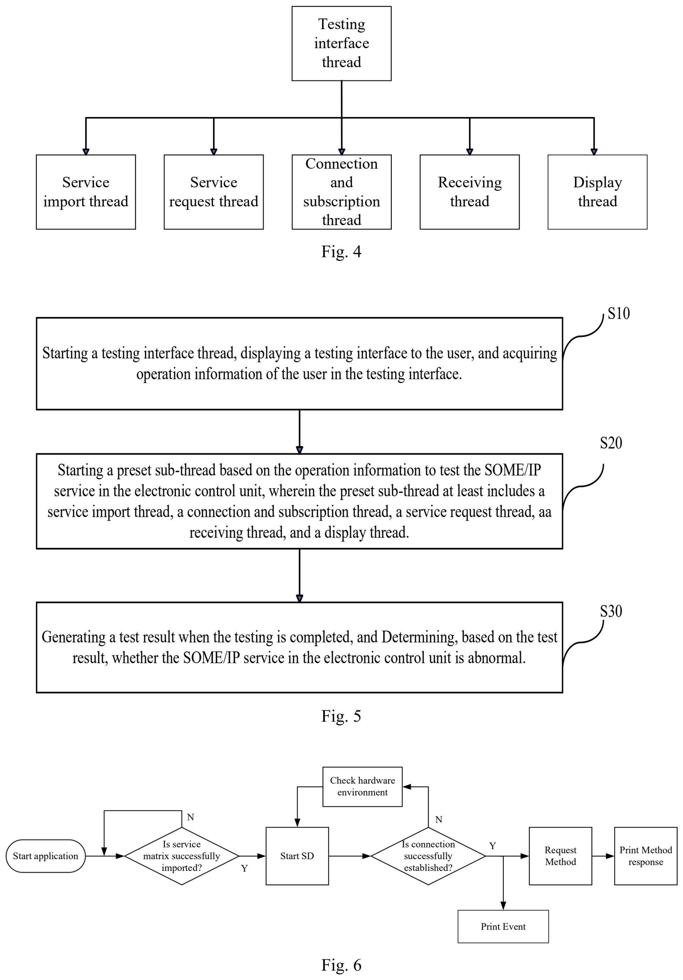

It should be appreciated that the preset sub-threads are a plurality of sub-threads that can run independently. As shown in Fig. 4, the preset sub-threads at least include the service import thread, the connection subscription thread, the service request thread, the receiving thread, and the display thread. Other sub-threads may also be configured. The present embodiment does not impose any limitations on this. The service import thread can be used to import service matrix information. The connection and subscription thread can be used to start SD to establish a SOME/IP connection and subscribe to Events. The service request thread can be used to send Method requests and invoke Methods. The receiving thread can be used to receive information/data such as Method response messages and Event information. The display thread can be used to display information/data such as Method response messages and Event information.

It should be appreciated that different sub-threads are triggered by different user operations. That is, the sub-thread to be started can be determined based on the user operation information.

It should be noted that the test result is generated when the SOME/IP service testing is completed. Based on the test result, the SOME/IP services in the in-vehicle electronic control unit can be analyzed to determine whether any problems or abnormalities occur, allowing timely detection.

Furthermore, the host computer 10 is further configured to:
start the service import thread when the operation information is service import operation information;
read a service matrix according to the path of the service matrix;
determine network node information, service deployment information, and service interface information based on the service matrix; and
display a list of electronic control units in the testing interface based on the network node information, service deployment information, and service interface information, and acquire a target in-vehicle electronic control unit selected by the user from the list of the electronic control units.

Furthermore, the host computer 10 is further configured to:
start the service request thread when the operation information is service request operation information;
determine a request parameter based on the service request operation information;
generate a service request message based on a target service and the request parameter;
send the service request message to the target electronic control unit; and
determine that invocation of the target service is completed when a request response is received from the target electronic control unit within a preset time.

Furthermore, the host computer 10 is further configured to display a service list corresponding to the target electronic control unit in the testing interface based on the network node information, service deployment information, and service interface information, and acquire the target service selected by the user from the service list.

Furthermore, the host computer 10 is further configured to:
start the connection and subscription thread when the operation information is subscription operation information;
generate a service discovery message based on the service deployment information;
send the service discovery message to the target electronic control unit; and
determine that a SOME/IP connection is established when a connection response is received from the target electronic control unit.

Furthermore, the host computer 10 is further configured to:
generate a subscription message based on the service interface information;
send the subscription message to the target electronic control unit; and
determine that the subscription is successful when a subscription response is received from the target electronic control unit.

Furthermore, the host computer 10 is further configured to:
start the receiving thread when the service request thread or the connection and subscription thread is started;
deserialize Ethernet data when the Ethernet data is received from the target electronic control unit to obtain deserialized data;
analyze the deserialized data to determine whether the deserialized data is valid; and
update cached service data based on the deserialized data if the deserialized data is valid.

Furthermore, the host computer 10 is further configured to:
start the display thread at preset intervals; and
read cached service data of the target electronic control unit and display the cached service data in the testing interface.

It should be appreciated that the service import operation information refers to operation information related to service matrix import. For example, it may include selecting the path of the service matrix to be imported from the service matrix import selection box. The present embodiment does not impose any limitations on this. The operation information being service import operation information indicates that the user has performed the operation related to service matrix import. At this point, the service import thread will be started to perform service matrix import. The subscription operation information refers to operation information related to starting SD or Event subscription. For example, this information may include clicking on the SD starting button. The present embodiment does not impose any limitations on this. The subscription operation information being operation information indicates that the user has performed the operation related to starting SD or Event subscription. At this point, the connection and subscription thread will be started. The service request operation information refers to operation information related to Method request or Method invocation. For example, this may include inputting parameters in the Method request parameter input box and clicking on a request sending button. The present embodiment does not impose any limitations on this. The service request operation information being operation information indicates that the user has performed the operation related to Method request or Method invocation. At this point, the service request thread will be started.

It should be appreciated that when the service request thread or the connection and subscription thread is started, the receiving thread will be started simultaneously to receive the Method response message or Event information. The display thread is usually started cyclically at preset intervals, which may be set at 10 ms. The present embodiment does not impose any limitations on this. The Method response message or Event information can be dynamically updated in display when the display thread is started at preset intervals.

In actual implementation, the sub-thread to be started is determined according to the operation information of the user. Testing of the corresponding sub-thread can then be started to complete testing of functions such as SD, Method invocation, Event subscription, and status display in the SOME/IP service.

In the present embodiment, the SOME/IP service testing system comprises the host computer 10, the Ethernet converter 20, and at least one electronic control unit 30. The host computer 10 is connected to the Ethernet converter 20 by means of the Ethernet harness, and the Ethernet converter 20 is connected to the electronic control unit 30 by means of the in-vehicle Ethernet harness. The host computer 10 is used for starting the testing interface thread, displaying the testing interface to the user, and acquiring operation information of the user in the testing interface. The host computer 10 is further used for starting a preset sub-thread on the basis of the operation information to test the SOME/IP service in the electronic control unit. The preset sub-thread at least includes the service import thread, the connection and subscription thread, the service request thread, the receiving thread, and the display thread. The host computer 10 is further used for generating the test result when the testing is completed, and determining, based on the test result, whether the SOME/IP service in the electronic control unit 30 is abnormal. The present embodiment builds a complete, simplified, and convenient testing system, which can test the SOME/IP service in the electronic control unit and detect problems in the single-unit testing phase, without waiting until the vehicle-level testing phase. In addition, the system features low testing cost and easier environment setup. Compared with traditional SOME/IP service testing methods, which may cause blockage in operation of the host computer UI, the present application separates modules that require long processing/waiting time and occupy significant amount of resources, by means of multi-thread processing. This solves the problems of blocking and crashing of the host computer UI, enhances the fluency of SOME/IP testing, and makes it easy for the user to operate the testing with the UI. In this way, user friendliness of the testing system is improved.

An embodiment according to the present application provides a SOME/IP service testing method. Referring to Fig. 5, which shows a schematic flowchart of a SOME/IP service testing method according to a first embodiment of the present application.

According to the present embodiment, the SOME/IP service testing method includes the following steps:
Step S10: starting a testing interface thread, displaying a testing interface to a user, and acquiring operation information of the user in the testing interface.

It should be noted that the SOME/IP service testing method according to the present embodiment is applied to the above SOME/IP service testing system, which includes the host computer, the Ethernet converter, and at least one electronic control unit. The specific structure of the SOME/IP service testing system is as shown in Figs. 1-3. An implementation subject of the present embodiment is the host computer in the SOME/IP service testing system. The host computer comprises a SOME/IP service testing program which implements SOME/IP service testing through a multi-threaded approach.

It should be appreciated that the testing interface thread is a main UI thread according to the present embodiment, which can display the testing interface in the host computer and provide operation entries to the user. The operation entries, which may be in the form of input boxes, selection boxes, buttons, or links, are related to functions including SD, Method invocation, Event subscription, and status display. For example, the operation entries may include a service matrix import selection box, an SD starting button, a Method request parameter input box, a Method request sending button, etc. The testing interface may also include information display windows such as a Method response message display window, an Event information real-time display window, and an information prompt window, which may be adjusted according to actual needs and are not limited by the present embodiment. The service matrix import selection box can be used to select the path of the service matrix. The SD starting button can be used to start an SD function. A Method request parameter input box can be used to input parameters related to a Method request. A Method request sending button can be used to send a Method request. A Method response message display window can be used to display response messages to Method requests. A Event information real-time display window can be used to display information related to Events. The information prompt window can be used to display prompts.

It should be appreciated that the user can operate on the operation entries in the testing interface and the operation performed by the user on the testing is referred to as operation information, which includes an operation object and operation data. The operation object is an object in the testing interface on which the user operates. For example, when the user inputs a parameter in a Method request parameter input box, the operation object is the Method request parameter input box; while when the user clicks an SD starting button, the operation object is the SD starting button. The operation data may be selected data or input data. The selected data is the content that the user selects from the operation object, for example, the path that the user selects from the service matrix import selection box. The input data is data that the user inputs in the operation object, for example, a parameter that the user inputs in the Method request parameter input box.

In actual implementation, the main UI thread is started to display the testing interface in the host computer and user operation entries. This allows the user to operate on the operation entries and the host computer to acquire related user operation information.

Fig. 6 illustrates a schematic flowchart of a testing interface thread. When a service matrix is successfully imported, SD can be started to establish a communication connection, and then Method requesting, Event printing, and Method response printing can be performed.

Step S20: starting a preset sub-thread based on the operation information to test the SOME/IP service in the electronic control unit. The preset sub-thread includes at least the service import thread, the connection and subscription thread, the service request thread, the receiving thread, and the display thread.

It should be noted that the preset sub-threads are a plurality of sub-threads that can run independently according to the embodiment. As shown in Fig. 4, the preset sub-threads at least include the service import thread, the connection and subscription thread, the service request thread, the receiving thread, and the display thread. Other sub-threads may also be configured, which is not limited hereto. The service import thread can be used to import service matrix information. The connection and subscription thread can be used to start SD to establish a SOME/IP connection and subscribe to an Event. The service request thread can be used to send a Method request and invoke a Method. The receiving thread can be used to receive information/data such as Method response messages and Event information. The display thread can be used to display information/data such as Method response messages and Event information.

It should be understood that different sub-threads are triggered by different user operations. In other words, the sub-thread to be started can be determined based on the user operation information. Sequential relationships may or may not be set for the sub-threads, which is not limited in the present embodiment.

It should be appreciated that the service import thread, connection and subscription thread, and service request thread are typically triggered and started by user operations. The receiving thread is usually started simultaneously with the connection and subscription thread or the service request thread. The display thread is generally started periodically at preset intervals. The preset interval may be set at 10 ms or adjusted according to actual requirements, which is not limited in the present embodiment.

In actual implementation, the sub-thread to be started is determined based on the operation information of the user, and the testing of functions such as SD, Method invocation, Event subscription, and status display in the SOME/IP service can be completed through different sub-threads.

In addition, when executing the sub-threads, a polling mechanism may be applied. After a sub-thread is triggered by the user's operation, it needs to wait for the polling time before officially starting to run. The polling interval may be set according to actual requirements, which is not limited in the present embodiment. Although the use of the polling mechanism may cause a small amount of blocking, it can still achieve optimization compared with conventional testing methods.

Step S30: generating a test result when the testing is completed, and determining, based on the test result, whether the SOME/IP service in the electronic control unit is abnormal.

It should be noted that the test result refers to the result generated by the testing of the SOME/IP service. Based on the test result, the SOME/IP service in the electronic control unit can be analyzed to determine whether a problem or abnormal occurs, so as to detect problems timely.

In the present embodiment, the testing interface thread is started to display the testing interface to the user. The operation information of the user in the testing interface is acquired. Based on the operation information, a preset sub-thread(s) is/are started to test the SOME/IP service in the electronic control unit. The preset sub-threads at least include the service import thread, the connection and subscription thread, the service request thread, the receiving thread, and the display thread. A test result is generated when the testing is completed, and whether the SOME/IP service in the electronic control unit is abnormal is determined based on the test result. Compared with traditional SOME/IP service testing methods, which may cause blocking in operation of the host computer UI, the present embodiment separates modules that require long processing time or waiting time and occupy significant amount of resources, by means of multi-thread processing. This prevents blocking of the host computer UI, and enhances the robustness of the system and the fluency of SOME/IP testing.

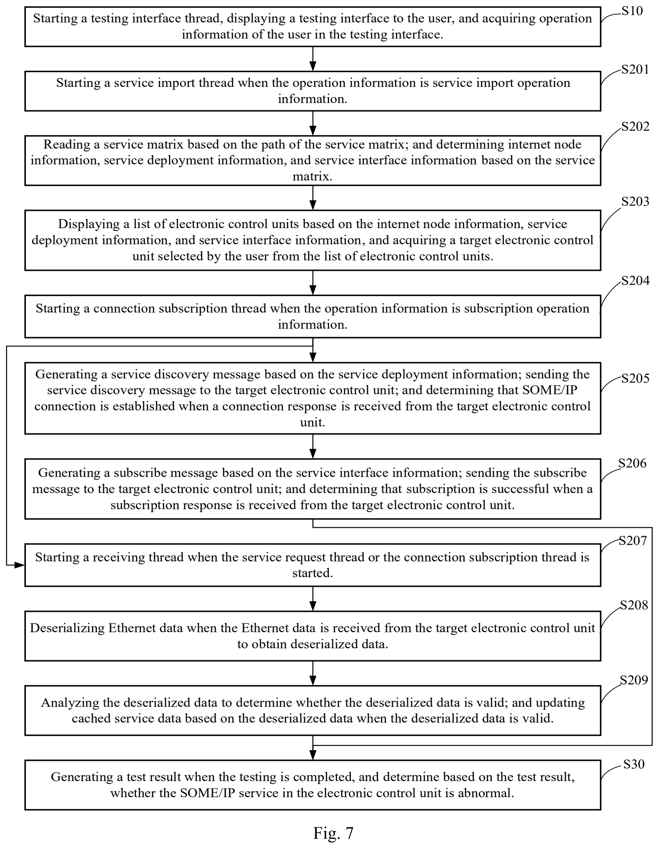

Referring to Fig. 7, which is a schematic flowchart of a SOME/IP service testing method according to a second embodiment of the present application.

Based on the above embodiments, the step S20 includes steps S201 to S203:
Step S201: starting the service import thread when the operation information is service import operation information.

It should be noted that the service import operation information refers to operation information related to the import of the service matrix, for example, it may be selection of the path of the service matrix to be imported from the service matrix import selection box. The present embodiment does not impose any limitations on this. The operation information being service import operation information indicates that the user has performed an operation related to the import of the service matrix. At this point, the service import thread will be started to import the service matrix.

Step S202: reading the service matrix according to the path of the service matrix; and determining network node information, service deployment information, and service interface information based on the service matrix.

It should be appreciated that the path of the service matrix is determined based on the operation information of the user, i.e., the path that the user selects from the service matrix import selection box. A corresponding service matrix is imported according to the path of the service matrix.

It should be understood that the network node information may be a network IP address of the electronic control unit. The service deployment information is service content to be tested by the electronic control unit. The service interface information is interface information in the electronic control unit related to service testing.

In actual implementation, a corresponding service matrix is imported according to the path selected by the user, and the network node information, service deployment information, and the service interface information is obtained.

Step S203: displaying a list of electronic control units based on the network node information, service deployment information, and service interface information, and acquiring a target electronic control unit selected by the user from the list of electronic control units.

It should be appreciated that the list of electronic control units refers to a list of all electronic control units to be tested in the testing system. The target electronic control unit is an object selected by the user from the list of the electronic control units and is to be tested currently. The testing system is connected to at least one electronic control unit. When there is one electronic control unit, this one is the target electronic control unit; and when there are more than one electronic control units, the target electronic control unit may be any one of these electronic control units.

In actual implementation, all electronic control units to be tested are displayed to the user and a target electronic control unit is determined according to the user's selection.

As shown in Fig, 8, which is a schematic flowchart of a service import thread, after the main UI thread is started, the service matrix is imported first to load service related information, service information and deployment information to be tested are acquired, and then a service request can be sent to the correct target electronic control unit.

Furthermore, the service list corresponding to the target electronic control unit is displayed in the testing interface based on the network node information, service deployment information and service interface information, and a target service that the user selected from a service list is acquired.

It should be appreciated that each electronic control unit has corresponding testing content/services, and the service list contains all content/services that each electronic control unit needs to test. The target service is content or a service that is being tested at the moment. It can be selected by the user from the service list.

In actual implementation, all testing content/services are displayed to the user and a target service is determined according to the user's selection.

Further, after step S203, the method further includes steps S204 to S206:
Step S204: starting the connection and subscription thread when the operation information is subscription operation information.

It should be appreciated that the subscription operation information is operation information related to starting SD or Event subscription, such as pressing the SD starting button. The present embodiment does not impose any limitations on this. The operation information being subscription operation information indicates that the user has performed an operation related to starting SD or Event subscription. At this point, the connection and subscription thread will be started.

Step S205: generating a service discovery message based on the service deployment information; sending the service discovery message to the target electronic control unit; and determining that a SOME/IP connection is established when a connection response is received from the target electronic control unit.

It should be noted that a service discovery message is a packaged SD message. The SD message is packaged on the basis of the service deployment message in a format specified in the SOME/IP specifications. After the SD message is sent to the target electronic control unit, if a response (i.e., the connection response) is received from the target electronic control unit, it is considered that a connection has been successfully established and SD is completed.

Step S206: generating a subscription message based on the service interface information; sending the subscription message to the target electronic control unit; and determining that subscription is successful when a subscription response is received from the target electronic control unit.

It should be appreciated that the subscription message is a packaged Subscribe EventGroup message. The Subscribe EventGroup message is packaged on the basis of the service interface information follows the format specified in the SOME/IP specifications. An Event to be subscribed can be determined according to the user's selection. After the Subscribe EventGroup message is sent to the target electronic control unit, if a response (i.e., the subscription response) is received from the target electronic control unit, it is considered that the Event subscription is successful.

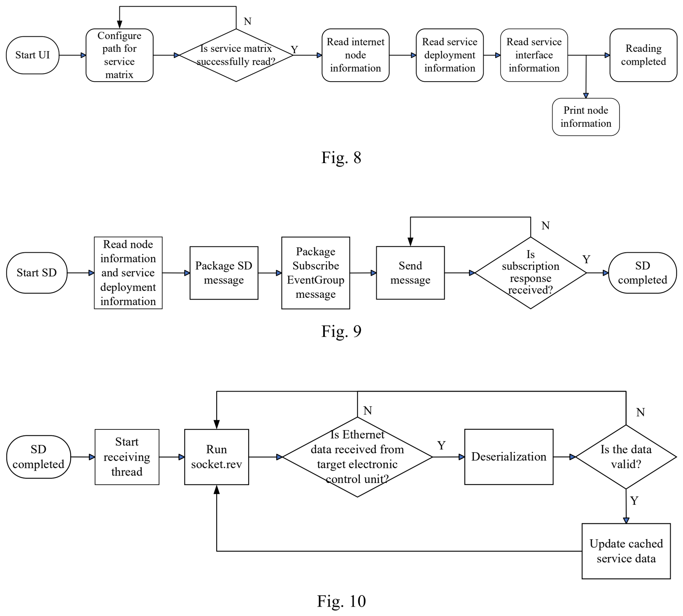

As shown in Fig. 9, which is a schematic flowchart of a connection and subscription thread, characteristics of the SOME/IP service require that SD is performed first at runtime. The SD message is packaged on the basis of the service deployment information; and the Subscribe EventGroup message is packaged on the basis of the service interface information. The SD message and the EventGroup message are sent to the target electronic control unit to establish a SOME/IP connection and subscribe to EventGroup.

It should be appreciated that establishment of SOME/IP connection and subscription of EventGroup may be performed separately. That is, the SOME/IP connection may be established first, followed with the subscription of EventGroup. Alternatively, establishment of SOME/IP connection and subscription of EventGroup may be performed simultaneously. That is, the SD message and the EventGroup message are sent to the target electronic control unit together. If subscription of EventGroup is successful, it indicates that the SOME/IP connection is successfully established.

The step S20 further includes steps S207-S209:
Step S207: starting the receiving thread when the service request thread or the connection and subscription thread is started.

It should be noted that when the service request thread or the connection and subscription thread is started, the receiving thread is started simultaneously to receive a Method response message or Event information.

In the present embodiment, it is Event information that the service request thread requires to receive.

Step S208: deserializing Ethernet data when the Ethernet data is received from the target electronic control unit to obtain deserialized data.

It should be appreciated that the Ethernet data sent by the target electronic control unit is a message sent by the target electronic control unit. It may be Method response or Event information. In the present embodiment, it is Event information. The deserialized data is data/information obtained from the deserialization of the message.

Step S209: analyzing the deserialized data and determining whether the deserialized data is valid; and updating cached service data based on the deserialized data when the deserialized data is valid.

In actual implementation, the deserialized data is analyzed to determine whether it is valid. If the deserialized data is valid, service data in the local cache (i.e., the cached service data) is updated.

As shown in Fig. 10, which is a schematic flowchart of a receiving thread, a separate thread (the receiving thread) is used to receive and analyze the SOME/IP message (Event information and Method response) from the target electronic control unit. The SOME/IP connection to the target electronic control unit is continuously monitored. Cache on the Ethernet is read by means of a *recvfrom* function of *socket,* the Ethernet data is then deserialized, and the service data in the local cache is updated according to service content in the message.

In the present embodiment, the preset sub-threads are started according to the operation information, and the SOME/IP service in the electronic control unit is tested. The preset sub-threads at least include the service import thread, connection and subscription thread, service request thread, receiving thread, and the display thread. The present embodiment determines a sub-thread to be started according to the operation information of the user. Functions in the SOME/IP service, such as SD and Event subscription, are tested by means of different sub-threads. The embodiments separate modules that require long processing/waiting time and occupy significant amount of resources through multiple threads, to address the problem of blocking of the host computer UI, thereby enhancing the robustness of the system and the fluency of SOME/IP testing.

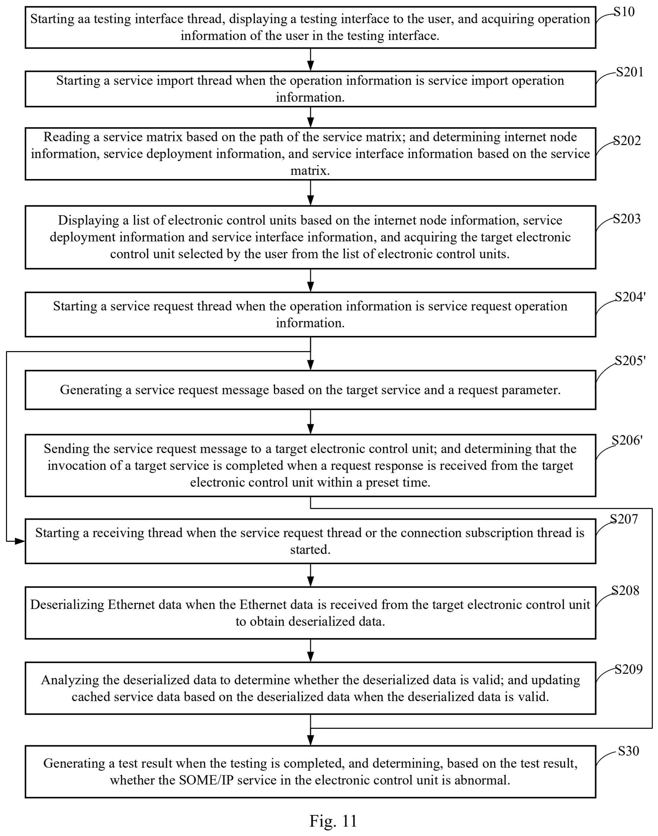

Referring to Fig. 11, which is a schematic flowchart of a SOME/IP service testing method according to a third embodiment of the present application.

Based on the above embodiments, the step S203 is followed with steps S204' to S206':
Step S204': starting the service request thread when the operation information is service request operation information.

It should be noted that testing the target service requires invoking a Method, and invoking a Method requires performing a Method request first. The service request operation information refers to operation information related to the Method request or Method invocation. For example, it may include entering parameters in a Method request parameter input box and pressing a request sending button. The present embodiment does not impose any limitations on this. When the operation information is service request operation information, it indicates that the user has performed an operation related to the Method request or Method invocation. At this point, the service request thread will be started.

Step S205': generating the service request message based on the target service and a request parameter.

It should be appreciated that the request parameter refers to a parameter related to the Method request that the user inputs. The service request message is the Method request message which has been serialized and packaged.

Step S206': sending the service request message to the target electronic control unit; and determining that invocation of the target service is completed when a request response is received from the target electronic control unit within a preset time.

It should be appreciated that the preset time is time set for receiving the response. If the response is not received beyond the preset time, it is considered that the response has timed out. After the service request message is sent to the target electronic control unit, if a response (i.e., the request response) is received from the target electronic control unit within the preset time, it is considered the Method invocation is completed.

It should be noted that in the present embodiment, the message received by the receiving thread is the Method response message.

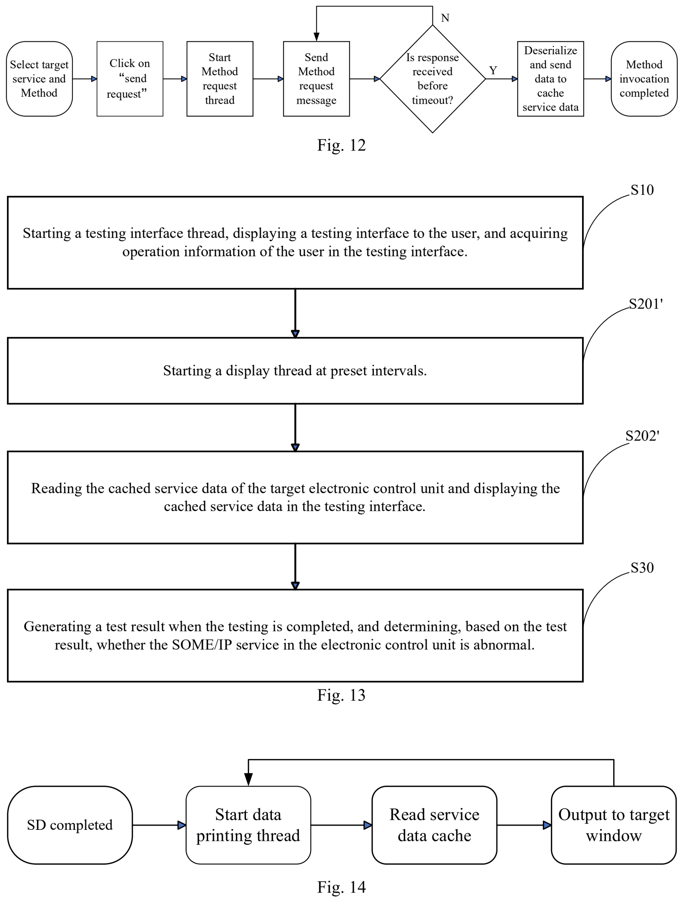

As shown in Fig. 12, which is a schematic flowchart of a service request thread, when invoking the Method of the target service, a separate Method request thread (i.e., the service request thread) is initiated. It serializes and packages the Method request message using the service information and request parameters following the format specified in the SOME/IP specifications, and then sends the serialized and packaged message to the target electronic control unit as an Ethernet message. When a response message is received from the target electronic control unit before timeout, the received response message is deserialized and stored to the service data cache.

In the present embodiment, the preset sub-threads are started based on the operation information to test the SOME/IP service in the electronic control unit. The preset sub-threads at least include the service import thread, the connection and subscription thread, the service request thread, the receiving thread, and the display thread. The present embodiment determines a sub-thread to be started according to the operation information of the user, tests functions in the SOME/IP service, such as SD and Event subscription, by means of different sub-threads. Multi-threading is used to offload modules that require long processing/waiting time and occupy significant amount of resources, thereby solving blocking problem of the host computer UI, enhancing the robustness of the system, and ensuring smoother SOME/IP testing.

Referring to Fig. 13, which is a schematic flowchart of a SOME/IP service testing method according to a fourth embodiment of the present application.

Based on the above embodiments, the step S20 further includes steps S201' and S202':
Step S201': starting the display thread at preset intervals.

It should be noted that the preset interval refers to launch cycle for the display thread. For example, the display thread may start every 10 ms, which can be adjusted flexibly according to actual needs. The present embodiment does not impose any limitations on this. Once the preset interval is reached, the display thread starts automatically.

Step S202': reading the cached service data of the target electronic control unit and displaying the cached service data in the testing interface.

It should be appreciated that the service data in the local cache can be read at preset intervals, and related information/data, such as Method response message and Event information, can be updated in a display window in the testing interface. The present embodiment does not impose any limitations on this.

As shown in Fig. 14, which is a schematic flowchart of a display thread, a thread (the display thread) that runs periodically is applied to dynamically update the Method response message display window and the Event information real-time display window to dynamically output the service data in the local cache to a target window/list.

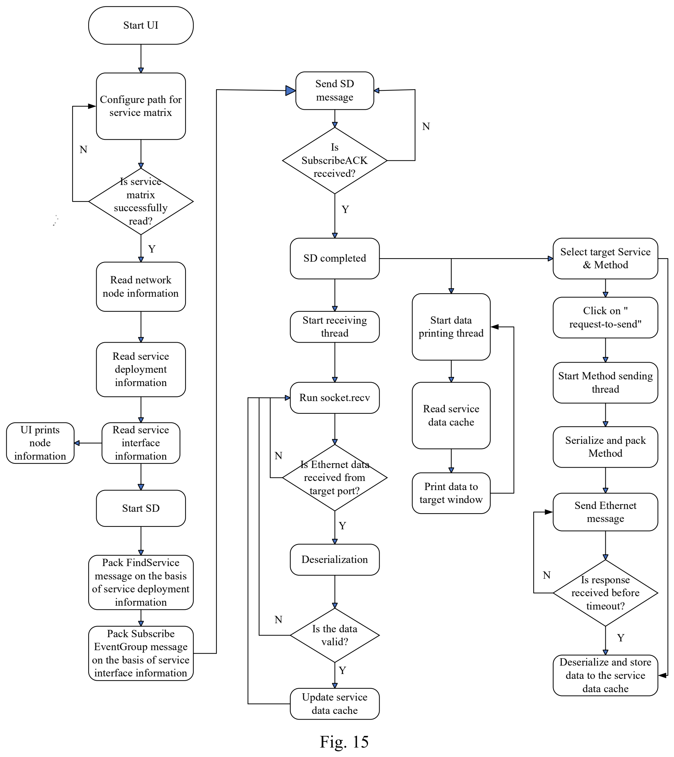

Fig. 15 is an overall schematic flowchart of a SOME/IP service testing method. First, a service matrix is imported and the service information is loaded, acquiring the service information and service deployment information to be tested. The SD message and the Subscribe EventGroup message are packaged on the basis of the service deployment information using the format specified in the SOME/IP specifications, and sent to the target electronic control unit to establish SOME/IP connection. The Method request message is serialized and packaged on the basis of the service information and request parameters in a format as specified in the SOME/IP specifications, and then sent to the target electronic control unit as an Ethernet message. The SOME/IP connection to the target electronic control unit is monitored continuously. Ethernet cache is read through the *recvfrom* function of *socket,* then the data is deserialized, and the service data in the local cache is updated with the service content in the received message. The service data in the local cache is dynamically output to the target window/list.

In the present embodiment, the preset sub-threads are started based on the operation information to test the SOME/IP service in the electronic control unit. The preset sub-threads at least include the service import thread, the connection and subscription thread, the service request thread, the receiving thread, and the display thread. The present embodiment determines a sub-thread to be started according to the operation information of the user, tests functions, such as SD, Method calling, Event subscription, and status display, in the SOME/IP service by means of different sub-threads. Multi-threading is used to separate modules that require long processing/waiting time and occupy significant amount of resources, thereby solving the blocking problem of the host computer UI, enhancing the robustness of the system, and ensuring smoother SOME/IP testing.

It should be appreciated that the above embodiments are only examples for illustration and do not constitute any limitations to the technical solutions of the present application. In actual application, persons in the art may do the setting according to actual needs. The present application does not impose any limitations on this.

It should be noted that above workflows are only schematic descriptions and do not constitute limitations on the scope of the present application. In actual application, persons skilled in the art may select part or all therefrom to realize the objective of an embodiment. The present application does not impose any limitations on this.

Besides, technical details which have not been described in these embodiments may refer to the SOME/IP service testing method according to any one of the embodiments of the present application, and will not be repeated.

Furthermore, it should be noted that in the present application, the term such as "comprising", "including" or other variation thereof is intended to indicate non-exclusive inclusion, so that a process, method, product or system comprising a list of elements not only includes the described elements but also other elements not explicitly listed or inherent elements to such process, method, product or system. Without further limitation, an element defined by the phrase "comprising a..." does not preclude the presence of additional identical elements in the process, method, product, or system that comprises the element.

The numerical order of the above embodiments is for description only and does not indicate superiority or inferiority of the embodiments.

Through the description of the above embodiments, those skilled in the art can clearly understand that the method according to the above embodiments may be implemented by means of software combined with a necessary general-purpose hardware platform. Of course it may also be implemented by means of hardware, but in many cases the former is a preferred embodiment. Based on this understanding, the essence of the technical solution of the present application or the part contributing to the prior art may be embodied in the form of a software product. This computer software product is stored in a storage medium (such as ROM/RAM, a disk, or a CD) and includes several instructions to enable a terminal device (which may be a mobile phone, a computer, a server, or a network device, etc.) to execute the method described in the various embodiments of the present application.

The above descriptions are merely preferred embodiments of the present application and are not intended to limit the scope of the present application. Any equivalent structural or procedural modifications made based on the content of the description and accompanying drawings of the present application, or direct or indirect application in other related technical fields, shall likewise fall within the scope of the present application.

## Claims

1. A SOME/IP service testing system, comprising a host computer, an Ethernet converter, and at least one in-vehicle electronic control unit, wherein the host computer is connected to the Ethernet converter via an Ethernet harness, and the Ethernet converter is connected to the in-vehicle electronic control unit via an in-vehicle Ethernet harness,
the host computer is configured to start a testing interface thread, display a testing interface to a user, and acquire operation information of the user in the testing interface;
the host computer is further configured to start a preset sub-thread based on the operation information to test a SOME/IP service in the in-vehicle electronic control unit, the preset sub-thread at least comprising a service import thread, a connection and subscription thread, a service request thread, a receiving thread, and a display thread; and
the host computer is further configured to generate a test result upon completion of the testing, and to determine, based on the test result, whether the SOME/IP service in the in-vehicle electronic control unit is abnormal.

2. The system according to claim 1, wherein the host computer is provided with an SOA client module and the in-vehicle electronic control unit is provided with an SOA server module, and the SOA client module and the SOA server module establish a communication connection via a SOME/IP protocol.

3. A SOME/IP service testing method, applied to the SOME/IP service testing system according to claim 1 or 2, the method comprising:
starting a testing interface thread to display a testing interface to a user, and acquiring operation information of the user in the testing interface;
starting a preset sub-thread based on the operation information to test a SOME/IP service in the in-vehicle electronic control unit, wherein the preset sub-thread comprises at least a service import thread, a connection and subscription thread, a service request thread, a receiving thread, and a display thread; and
generating a test result upon completion of the testing, and determining, based on the test result, whether the SOME/IP service in the in-vehicle electronic control unit is abnormal.

4. The method according to claim 3, wherein starting the preset sub-thread based on the operation information to test the SOME/IP service in multiple in-vehicle electronic control units comprises:
starting the service import thread when the operation information is service import operation information;
reading a service matrix according to a path of the service matrix;
determining network node information, service deployment information, and service interface information based on the service matrix; and
displaying a list of in-vehicle electronic control units in the testing interface and based on the network node information, the service deployment information, and the service interface information, acquiring a target in-vehicle electronic control unit selected by the user from the list of in-vehicle electronic control units.

5. The method according to claim 4, wherein starting a preset sub-thread based on the operation information to test the SOME/IP service in multiple in-vehicle electronic control units comprises:
starting the service request thread when the operation information is service request operation information;
determining a request parameter based on the service request operation information;
generating a service request message based on a target service and the request parameter;
sending the service request message to the target in-vehicle electronic control unit; and
determining that invocation of the target service is completed when a request response is received from the target in-vehicle electronic control unit within a preset time.

6. The method according to claim 5, further comprising:
displaying, in the testing interface, a service list corresponding to the target in-vehicle electronic control unit based on the network node information, the service deployment information and the service interface information, and acquiring the target service selected by the user from the service list.

7. The method according to claim 4, wherein starting a preset sub-thread based on the operation information to test the SOME/IP service in multiple in-vehicle electronic control units comprises:
starting the connection and subscription thread when the operation information is subscription operation information;
generating a service discovery message based on the service deployment information;
sending the service discovery message to the target in-vehicle electronic control unit; and
determining that a SOME/IP connection is established when a connection response is received from the target in-vehicle electronic control unit.

8. The method according to claim 7, wherein after starting the connection and subscription thread when the operation information is subscription operation information, the method further comprises:
generating a subscription message based on the service interface information;
sending the subscription message to the target in-vehicle electronic control unit; and
determining that subscription is successful when a subscription response is received from the target in-vehicle electronic control unit.

9. The method according to any of claims 5 to 8, wherein starting a preset sub-thread based on the operation information to test the SOME/IP service in multiple in-vehicle electronic control units comprises:
starting the receiving thread when the service request thread or the connection and subscription thread is started;
upon receiving Ethernet data from the target in-vehicle electronic control unit, deserializing the Ethernet data to obtain deserialized data;
analyzing the deserialized data to determine whether the deserialized data is valid; and
updating cached service data based on the deserialized data when the deserialized data is valid.

10. The method according to claim 9, wherein starting a preset sub-thread based on the operation information to test the SOME/IP service in multiple in-vehicle electronic control units comprises:
starting the display thread at preset intervals; and
reading cached service data of the target in-vehicle electronic control unit and displaying the cached service data in the testing interface.
